# EUROPEAN PATENT APPLICATION

(11) **EP 4 682 104 A1**
(43) Date of publication of application: **21.01.2026**
(21) Application number: 24774600.1
(22) Date of filing: 28.02.2024
(51) Int. Cl.: C01B 33/20, C09K 11/00, C09K 11/08, C09K 11/79, G01T 1/202

(54) **LUTETIUM SILICATE CRYSTAL, METHOD FOR PRODUCING SAME, SCINTILLATOR MATERIAL USING SAME, RADIATION DETECTOR, AND RADIATION INSPECTION DEVICE**

(30) Priority: 17.03.2023 JP 2023042632
(71) Applicant: National Institute for Materials Science, Tsukuba-shi, Ibaraki 305-0047 (JP); Mitsubishi Chemical Corporation, Tokyo 100-8251 (JP)
(72) Inventor: SHIMAMURA, Kiyoshi, Tsukuba-shi, Ibaraki 305-0047 (JP); GARCIA VILLORA, Encarnacion Antonia, Tsukuba-shi, Ibaraki 305-0047 (JP); IZUMISAWA, Satoru, Tokyo 100-8251 (JP); SAITO, Makoto, Tokyo 100-8251 (JP)
(74) Representative: Dehns
(86) International application number: PCT/JP2024/007202
(87) International publication number: WO 2024/195455

(57) **Abstract**

The present invention provides a defect-controlled lutetium silicate crystal and a method for producing the same. A lutetium silicate crystal according to an embodiment of the present invention is characterized by containing at least lutetium (Lu), silicon (Si), oxygen (O), and hydrogen (H), having the same crystal structure as a crystal represented by Lu₂SiO₅, and having an absorption peak derived from an OH group in a wave number range of 3000 cm⁻¹ or more and 3800 cm⁻¹ or less in an infrared absorption spectrum.

## Description

### Technical Field

The present invention relates to a lutetium silicate crystal, a method for producing the same, a scintillator material using the same, a radiation detector, and a radiation inspection apparatus.

### Background Art

A radiation inspection apparatus is used in various fields and aspects such as an inspection apparatus for non-destructive inspection and a diagnostic apparatus for medical use. Exemplary aspects include an aspect in which a subject is irradiated with radiation (X-ray, neutron ray, or the like) and the radiation that has passed through the subject is detected by a radiation detector, and an aspect in which a radiation source (radioactive substance) is disposed in advance inside the subject and radiation (γ ray or the like) that was generated from the radiation source and has passed through the subject is detected by the radiation detector.

The radiation detector generally includes a scintillator material (also simply referred to as a scintillator) that converts radiation into light, and a photoelectric converter that detects light emitted from the scintillator material and converts the light into an electric signal.

Conventionally, a crystal such as Bi₄Ge₃O₁₂ (BGO), Ce:Gd₂SiO₅ (Ce:GSO), or Ce:Lu₂SiO₅ (Ce:LSO) has been used as a scintillator material for a positron emission tomography (PET) apparatus. Since a PET γ-ray detector simultaneously measures a high-energy γ-ray (511 keV), a scintillator material to be used is required to have good sensitivity and to accurately detect time information and energy information. In recent years, as next-generation PET, depth of interaction (DOI) type PET and time of fright (TOF) type PET have been actively developed, and studies on a scintillator material having better scintillation performance have been actively performed (see Non Patent Literatures 1 and 2). For example, as a scintillator material for TOF type PET, in addition to LSO described above, usefulness of a lutetium silicate such as Lu₂₋ₓYₓSiO₅(LYSO) or Lu₂₋ₓGdₓSiO₅(LGSO) is indicated, and studies for application of a material obtained by adding cerium or the like as an activator to the lutetium silicate to TOF type PET are performed.

In general, a crystal contains defects, and it is known that many of characteristics of the crystal are largely affected by presence of such defects. In a crystal as a scintillator material, for example, scintillation performance is deteriorated due to crystal defects. In addition, crystal defects (oxygen defects) caused by oxygen shortage, a case where ionic values of some of cations of an element added (doped) as an activator are not appropriate (hereinafter, referred to as a "cation defect" for convenience), and the like can also be a factor of deteriorating scintillation performance.

In the above-described lutetium silicate such as LSO, LYSO, or LGSO, a crystal is usually grown by a Czochralski (CZ) method. The CZ method is a method capable of growing a crystal without bringing the crystal into contact with a container, and is known as a method for growing a bulk crystal. However, since each of LSO, LYSO, and LGSO described above has a very high melting point of about 2100°C to 2150°C, a phenomenon that a specific component evaporates from (an interface of) a melt easily occurs in a growth process of a target crystal (crystal growth process), and such an evaporation phenomenon may also occur from a grown crystal. Therefore, there is a high possibility that many defects are present in a crystal grown under such a high-temperature condition. Actually, according to experiments performed by the present inventors, it has been found that the above-described evaporation phenomenon can be somewhat suppressed and a frequency of generation of defects can be reduced by loosening a temperature gradient at the time of crystal growth and lowering the temperature of a growth interface, but even if crystal growth conditions are variously devised as described above, scintillation performance that can be originally exhibited as a scintillator material cannot be sufficiently obtained in a lutetium silicate crystal prepared by the CZ method in many cases. In addition, when a container such as an iridium crucible, which is essential in the CZ method, is used at a high temperature for a long time, breakage or the like is likely to occur, and a container life is shortened, which is not desirable from a viewpoint of manufacturing cost.

### Citation List

### Non Patent Literature

Non Patent Literature 1: Laishun Qin et al., Influence of RE Doping on the Scintillation Properties of LSO Crystals, IEEE Transactions on Nuclear Science, vol. 55, no. 3, pp. 1216-1220, June 2008. Doi: 10.1109/TNS.2008.915686.
Non Patent Literature 2: Jianming Chen, Large Size LSO and LYSO Crystals for Future High Energy Physics Experiments, IEEE Transactions on Nuclear Science, vol. 54, no. 3, pp. 718-724, June 2007. Doi: 10.1109/TNS.2007.897823.

### Summary of Invention

### Technical Problem

The present invention has been made in view of such circumstances, and an object thereof is to provide a defect-controlled lutetium silicate crystal, and particularly to provide a lutetium silicate crystal useful as a scintillator material for detecting radiation, that is, a lutetium silicate crystal that is excited by radiation and emits visible light in a defect-controlled aspect.

Another object of the present invention is to provide a method for producing the above-described lutetium silicate crystal under a milder condition than a conventional condition, particularly under a lower temperature condition.

Still another object of the present invention is to provide a scintillator material using the above-described lutetium silicate crystal, a radiation detector, and a radiation inspection apparatus.

### Solution to Problem

A lutetium silicate crystal according to the present invention contains at least lutetium (Lu), silicon (Si), oxygen (O), and hydrogen (H), has the same crystal structure as a crystal represented by Lu₂SiO₅, and has an absorption peak derived from an OH group in a wave number range of 3000 cm⁻¹ or more and 3800 cm⁻¹ or less in an infrared absorption spectrum, thereby solving the above problems.

The lutetium silicate crystal of the present invention may further contain Ln (Ln is at least one selected from the group consisting of lanthanoid elements excluding Lu, scandium (Sc), and yttrium (Y)).

The Ln may be selected from the group consisting of Y and gadolinium (Gd).

The lutetium silicate crystal of the present invention may further contain an alkali metal and/or an alkaline earth metal.

A concentration of the alkali metal and/or alkaline earth metal may be in a range of 1 × 10¹² atoms/cm³ or more and 1 × 10¹⁸ atoms/cm³ or less.

In the lutetium silicate crystal of the present invention, a concentration of hydrogen may be in a range of 1 × 10¹⁷ atoms/cm³ or more and 1 × 10¹⁹ atoms/cm³ or less.

The lutetium silicate crystal of the present invention does not have to have an absorption band in a wavelength range of 200 nm or more and 250 nm or less in an ultraviolet-visible absorption spectrum.

The lutetium silicate crystal of the present invention may be activated with an activation element Q selected from the group consisting of cerium (Ce), praseodymium (Pr), europium (Eu), and terbium (Tb).

The activation element Q may be Ce.

The Ce may be Ce³⁺.

The lutetium silicate crystal of the present invention may have a first absorption peak in a wavelength range of 330 nm or more and 390 nm or less, a second absorption peak in a wavelength range of 275 nm or more and 330 nm or less, and a third absorption peak in a wavelength range of 240 nm or more and less than 275 nm in an ultraviolet-visible absorption spectrum, and the magnitudes of absorbance of the first to third absorption peaks may be smaller in order of the first absorption peak, the second absorption peak, and the third absorption peak.

In the lutetium silicate crystal of the present invention, in an excitation spectrum when an emission wavelength is fixed to 400 nm, a ratio of a peak value of an emission intensity when excited at an excitation wavelength in a range of 275 nm or more and 325 nm or less to a peak value of an emission intensity when excited at an excitation wavelength in a range of 325 nm or more and 390 nm or less may satisfy 0.6 or more and 0.9 or less, and a ratio of a peak value of an emission intensity when excited at an excitation wavelength in a range of 250 nm or more and 275 nm or less to a peak value of an emission intensity when excited at an excitation wavelength in a range of 325 nm or more and 390 nm or less may satisfy 0.4 or more and less than 0.75.

A method for producing the above-described lutetium silicate crystal according to the present invention includes causing a raw material containing lutetium (Lu), a raw material containing silicon (Si), a raw material containing Ln (Ln is at least one selected from the group consisting of lanthanoid elements excluding Lu, scandium (Sc), and yttrium (Y)) as necessary, and a raw material containing an activation element Q (Q is selected from the group consisting of cerium (Ce), praseodymium (Pr), europium (Eu), and terbium (Tb)) as necessary to react by a hydrothermal synthesis method in the presence of a mineralizer containing an alkali metal and/or an alkaline earth metal, thereby solving the above-described problems.

A concentration of the mineralizer may be in a range of 1 M or more and 50 M or less.

The method for producing the lutetium silicate crystal of the present invention may further include preparing a raw material mixture containing the above-described raw materials, and the raw material mixture may be prepared such that a molar ratio between the sum of Lu, Ln, and Q, and Si in the raw material mixture satisfies 1.5 to 2.5 : 0.5 to 1.5.

The reaction by the hydrothermal synthesis method may be performed in a temperature range of 400°C or more and 800°C or less and a pressure range of 50 MPa or more and 250 MPa or less.

The scintillator material according to the present invention is a scintillator material containing the above-described lutetium silicate crystal, thereby solving the above-described problems.

The radiation detector according to the present invention includes the above-described scintillator material and a photoelectric converter that detects light from the scintillator material and converts the light into an electric signal, thereby solving the above-described problems.

The radiation inspection apparatus according to the present invention includes the above-described radiation detector, and is configured to detect radiation emitted from a subject with the radiation detector, thereby solving the above-described problems.

### Advantageous Effects of Invention

According to the present invention, there is provided a novel lutetium silicate crystal which is a defect-controlled crystal in which oxygen defects and cation defects are suppressed by inclusion of an OH group in the crystal. When the lutetium silicate crystal of the present invention is activated with, for example, Ce, the lutetium silicate crystal functions as a scintillator material. In particular, since the lutetium silicate crystal of the present invention has very few defects, an increase in emission intensity and an increase in scintillation performance due to radiation irradiation can be expected. By use of a radiation detector using such a scintillator material, a high-resolution radiation inspection apparatus can be provided.

The lutetium silicate crystal of the present invention is produced by a hydrothermal synthesis method, and therefore can be synthesized under a lower temperature condition as compared with the conventional CZ method. As a result, an obtained crystal is a defect-controlled crystal in which the above-described oxygen defects and cation defects are suppressed. In addition, in the present invention, since it is not necessary to use an expensive iridium crucible which is essential for the conventional CZ method, production cost of the target crystal can be reduced. Furthermore, the hydrothermal synthesis method can be performed without requirement of an advanced technique, and thus is practically advantageous.

### Brief Description of Drawings

Fig. 1 is a schematic diagram indicating a configuration of a radiation detector according to an embodiment of the present invention.
Fig. 2 is a schematic diagram indicating a configuration of a PET apparatus as an example of a radiation inspection apparatus according to an embodiment of the present invention.
Fig. 3A is a view indicating a microscopic image of a crystal of Example 1 obtained in Examples.
Fig. 3B is a view indicating a microscopic image of a crystal of Example 2 obtained in Examples.
Fig. 3C is a view indicating a microscopic image of a crystal of Example 3 obtained in Examples.
Fig. 3D is a view indicating a microscopic image of a crystal of Example 4 obtained in Examples.
Fig. 3E is a view indicating a microscopic image of a crystal of Example 5 obtained in Examples.
Fig. 4 shows graphs indicating a powder X-ray diffraction measurement result of a crystal of Example 1 and a simulation result of a diffraction chart of a crystal (monoclinic system) represented by Lu₂SiO₅.
Fig. 5A shows graphs indicating infrared absorption spectra of crystals of Examples 1 and 7 in a wave number range of 1000 cm⁻¹ to 4000 cm⁻¹.
Fig. 5B shows graphs indicating enlarged infrared absorption spectra shown in Fig. 5A in a wave number range of 3000 cm⁻¹ to 4000 cm⁻¹.
Fig. 6 shows graphs indicating concentrations of hydrogen and potassium for a secondary ion mass spectrometry result of the crystal of Example 4.
Fig. 7(a) shows graphs indicating transmission spectra of crystals of Examples 1 and 7, and Fig. 7(b) shows graphs indicating absorption spectra of the crystals of Examples 1 and 7.
Fig. 8 shows graphs indicating transmission spectra of crystals of Example 3 and 4, and a schematic diagram indicating 4f-5d electron orbital transition of Ce³⁺.
Fig. 9(a) shows graphs indicating transmission spectra of crystals of Examples 3, 4, and 8, and Fig. 9(b) shows graphs indicating absorption spectra of crystals of Examples 3, 4 and 8.
Fig. 10 shows graphs indicating results of performing deconvolution processing on an absorption spectrum of a crystal of Example 8.
Fig. 11 shows graphs indicating excitation spectra of crystals of Examples 3, 4 and 8.

### Description of Embodiments

Hereinafter, embodiments of the present invention will be described.

### [Lutetium silicate crystal]

A lutetium silicate crystal according to an embodiment of the present invention (hereinafter, also simply referred to as "lutetium silicate crystal") contains at least lutetium (Lu), silicon (Si), oxygen (O), and hydrogen (H) as constituent elements. The lutetium silicate crystal may further contain Ln (Ln is at least one selected from the group consisting of lanthanoid elements excluding Lu, scandium (Sc), and yttrium (Y)) as necessary.

That is, in an embodiment, the lutetium silicate crystal is represented by a general formula (Lu, Ln)₂SiO₅, and more specifically, preferably represented by a general formula (Lu₁₋ₓLnₓ)₂SiO₅ (0 ≤ x < 0.3).

In an embodiment, a concentration of hydrogen is in a range of 1 × 10¹⁷ atoms/cm³ or more and 1 × 10¹⁹ atoms/cm³ or less.

### <Ln element >

In an embodiment, the above-described lanthanoid elements excluding Lu are elements with atomic numbers 57 to 70, that is, lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), and ytterbium (Yb). Here, since Ce, Pr, Eu, and Tb can be the activation element Q described later, the lanthanoid elements may be La, Nd, Pm, Sm, Gd, Dy, Ho, Er, Tm, and Yb.

In an aspect in which the lutetium silicate crystal contains Ln, Ln is preferably selected from the group consisting of Y and Gd.

Note that, as understood from the above general formula, when the lutetium silicate crystal contains Ln, the Ln is present in the crystal in such a manner that a rare earth site of Lu₂SiO₅ is replaced with the Ln.

### <Optional constituent element>

The lutetium silicate crystal may further contain an optional constituent element other than Lu, Si, O, H, and Ln described above.

In an embodiment, the lutetium silicate crystal further contains an alkali metal and/or an alkaline earth metal as an optional constituent element. In an exemplary aspect, the alkali metal is selected from the group consisting of lithium (Li), sodium (Na), potassium (K), rubidium (Rb), cesium (Cs), and francium (Fr), and is preferably selected from the group consisting of K, Rb and Cs among these elements. The alkaline earth metal is selected from the group consisting of beryllium (Be), magnesium (Mg), calcium (Ca), strontium (Sr), barium (Ba), and radium (Ra), and is preferably selected from the group consisting of Ca, Sr, and Ba among these elements. The alkali metal and the alkaline earth metal may be used singly, or may be used in combination of two or more kinds thereof. By inclusion of an alkali metal and/or an alkaline earth metal in the lutetium silicate crystal, it is expected that defects in the crystal are inactivated.

In an aspect in which the lutetium silicate crystal contains an alkali metal and/or an alkaline earth metal, a concentration of the alkali metal and/or alkaline earth metal is in a range of 1 × 10¹² atoms/cm³ or more and 1 × 10¹⁸ atoms/cm³ or less, and preferably in a range of 1 × 10¹⁴ atoms/cm³ or more and 1 × 10¹⁶ atoms/cm³ or less.

A method for measuring the concentration of the alkali metal and/or alkaline earth metal in the lutetium silicate crystal is not particularly limited, and can be confirmed by a conventional method, and for example, secondary ion mass spectrometry (SIMS) can be used. The same applies to a concentration of an element other than the alkali metal and alkaline earth metal (for example, the above-described concentration of hydrogen).

### <Activation element Q>

The lutetium silicate crystal may further contain another element Q as an activator (also referred to as a dopant). In the present specification, such an element contained as an activator is also referred to as the activation element Q. By inclusion of the activation element Q in the lutetium silicate crystal, the activation element Q functions as a luminescent center, and a scintillator material having excellent luminescent characteristics can be obtained. When the lutetium silicate crystal contains the activation element Q, the activation element Q is present in the crystal in such a manner that a rare earth site of Lu₂SiO₅ is replaced with the activation element Q.

In an embodiment, the activation element Q is a rare earth element other than Lu and a lanthanoid element contained as Ln as necessary, and is preferably one or more elements selected from the group consisting of Ce, Pr, Eu, and Tb. The activation element Q preferably contains Ce, and Ce is more preferably Ce³⁺ from a viewpoint of obtaining better scintillation performance as a scintillator material. In an aspect in which the activation element Q is Ce, Ce is preferably present in the crystal in a state of Ce³⁺. As a result, a function of Ce as a luminescent center is effectively exhibited, and a scintillator material having better luminescent characteristics can be obtained. On the other hand, when some or most atoms of Ce are present in the crystal in a state of Ce⁴⁺, it may be impossible to obtain desired scintillation performance as a scintillator material.

Conventionally, it has been reported that the amount of luminescence is increased or a fluorescence lifetime is shortened by adding a trace amount of Ca or Sr to Ce: LSO, and it is described in some cases that these additive elements increase the amount of Ce³⁺ in the crystal. However, considering a relationship between the valence of Ce and the valence of the additional element, a causal relationship with the increase in the amount of Ce³⁺ is just a guess, and rather, there is a possibility that defects in the crystal are slightly inactivated by the presence of the additional element, thereby improving scintillation performance. On the other hand, in the lutetium silicate crystal of the present invention, presence of hydrogen is considered to contribute to inactivation of defects in the crystal. This point will be described in detail below.

In an aspect in which the lutetium silicate crystal contains the above-described activation element Q, a concentration of the activation element Q is not particularly limited. When the lutetium silicate crystal contains the appropriate activation element Q in an appropriate concentration, a scintillator material having desired scintillation performance can be obtained.

### <Crystal structure>

The lutetium silicate crystal has the same crystal structure as a crystal represented by Lu₂SiO₅. Specifically, the lutetium silicate crystal belongs to a monoclinic crystal system, belongs to C12/c1 (No. 15 space group of International Tables for Crystallography (also simply referred to as International Table (s))), and occupies crystal parameters and atomic coordinate positions shown in Table 1.

### [Table 1]

**Table 1: Data of crystal structure of Lu₂SiO₅**

| Composition | Lu₂SiO₅ | | | |
|---|---|---|---|---|
| Chemical unit No. (Z) | 8 | | | |
| Crystal system | Monoclinic | | | |
| Space group | C12/c1 | | | |
| Space group No. | 15 | | | |
| | a | 14.2774(7) | Å | |
| | b | 6.6398(4) | Å | |
| Lattice constant | c | 10.2465(6) | Å | |
| | *α* | 90 | degree | |
| | *β* | 122.224(1) | degree | |
| | *γ* | 90 | degree | |

| Atom | Atomic coordinate | | | Occupancy |
|---|---|---|---|---|
| | x | y | z | |
| Lu1 | 0.53734(5) | 0.75593(10) | 0.46705(7) | 1 |
| Lu2 | 0.14093(5) | 0.37735(10) | -0.16362(7) | 1 |
| Si1 | 0.31792(8) | 0.59171(15) | 0.19311(12) | 1 |
| O1 | 0.41117(6) | 0.50618(12) | 0.36201(9) | 1 |
| O2 | 0.38016(7) | 0.78834(12) | 0.17623(10) | 1 |
| O3 | 0.20230(6) | 0.64896(13) | 0.17684(9) | 1 |
| O4 | 0.29842(7) | 0.42890(13) | 0.06298(9) | 1 |
| O5 | 0.01773(6) | 0.40340(12) | -0.10250(9) | 1 |

In the crystal of Lu₂SiO₅, a lattice constant changes due to replacement of a constituent component thereof with another element or solid solution of an activation element, but a crystal structure, a site occupied by an atom, and an atomic position given by coordinates thereof do not change to such a large degree that a chemical bond between skeleton atoms is broken.

The lutetium silicate crystal has an absorption peak derived from an OH group in a wave number range of 3000 cm⁻¹ or more and 3800 cm⁻¹ or less in an infrared absorption spectrum. As understood from a production method described later, the absorption peak is caused by inclusion of water (H₂O) in the reaction system, and is unique to the lutetium silicate crystal of the present invention, which is not observed in a crystal produced by the conventional CZ method.

In other words, the crystal represented by Lu₂SiO₅ can be denoted as LSO, and the lutetium silicate crystal of the present invention is a novel compound different from conventional LSO in that the lutetium silicate crystal of the present invention contains H as a constituent element in addition to Lu, Si, and O, and contains an OH group in the crystal. In addition, inclusion of an OH group in the crystal of the lutetium silicate crystal is a result of inclusion of water in the reaction system, and the lutetium silicate crystal is produced at a temperature lower than a conventional temperature. Therefore, it is considered that oxygen defects and cation defects are suppressed, and this contributes to a high-quality crystal in which defects are controlled. Furthermore, by inclusion of hydrogen in the lutetium silicate crystal, it is expected that defects in the crystal are inactivated. It is considered that not all hydrogen atoms contained in the lutetium silicate crystal are in a state of OH group, an arrangement of hydrogen atoms in the crystal may be random, and among these hydrogen atoms, a hydrogen atom located at a position close to an oxygen atom operates as an OH group (or an atomic group having a property equivalent to that of the OH group), thereby indicating a specific absorption peak derived from the OH group in the above-described wave number range in an infrared absorption spectrum.

The index indicating that the lutetium silicate crystal is a defect-controlled high-quality crystal is not limited to the above-described infrared absorption spectrum.

In an embodiment, the lutetium silicate crystal does not have an absorption band in a wavelength range of 200 nm or more and 250 nm or less in an ultraviolet-visible absorption spectrum. Here, the phrase "having no absorption band in the wavelength range" does not mean that absorption in the wavelength range is zero, but means that a spectrum shape is substantially flat and presence of an absorption band or a peak value is not specified.

On the other hand, in an aspect in which the lutetium silicate crystal contains the activation element Q, an absorption band caused by presence of the activation element Q may be observed in the above-described wavelength range in an ultraviolet-visible absorption spectrum. Therefore, in this aspect, instead of the above-described index, it is preferable to analyze an absorption peak (first absorption peak) in a wavelength range of 330 nm or more and 390 nm or less, an absorption peak (second absorption peak) in a wavelength range of 275 nm or more and 330 nm or less, and an absorption peak (third absorption peak) in a wavelength range of 240 nm or more and less than 275 nm. Specifically, in an aspect, the lutetium silicate crystal has the first absorption peak, the second absorption peak, and the third absorption peak described above in an ultraviolet-visible absorption spectrum, and the magnitudes of absorbance of the first to third absorption peaks are smaller in order of the first absorption peak, the second absorption peak, and the third absorption peak.

More specifically, for example, in an aspect in which the activation element Q is Ce, by presence of Ce in the crystal in a state of Ce³⁺, in an ultraviolet-visible absorption spectrum of the lutetium silicate crystal, in addition to the above-described first absorption peak, a second absorption peak and a third absorption peak are clearly specified, and the magnitudes of absorbance of the first to third absorption peaks are smaller in order of the first absorption peak, the second absorption peak, and the third absorption peak.

In another embodiment, in the lutetium silicate crystal, in an excitation spectrum when an emission wavelength is fixed to 400 nm, a ratio of a peak value of an emission intensity when excited at an excitation wavelength in a range of 275 nm or more and 325 nm or less to a peak value of an emission intensity when excited at an excitation wavelength in a range of 325 nm or more and 390 nm or less satisfies 0.6 or more and 0.9 or less, and a ratio of a peak value of an emission intensity when excited at an excitation wavelength in a range of 250 nm or more and 275 nm or less to a peak value of an emission intensity when excited at an excitation wavelength in a range of 325 nm or more and 390 nm or less satisfies 0.4 or more and less than 0.75. The lutetium silicate crystal satisfying this condition may be a high-quality crystal that is more effectively defect-controlled, and may be useful as a scintillator material having a higher emission intensity.

### [Method for producing lutetium silicate crystal]

Next, a method for producing the above-described lutetium silicate crystal will be described.

A method for producing a lutetium silicate crystal according to an embodiment of the present invention includes causing a raw material containing lutetium (Lu), a raw material containing silicon (Si), a raw material containing Ln (Ln is at least one selected from the group consisting of lanthanoid elements excluding Lu, scandium (Sc), and yttrium (Y)) as necessary, and a raw material containing an activation element Q (Q is selected from the group consisting of cerium (Ce), praseodymium (Pr), europium (Eu), and terbium (Tb)) as necessary to react by a hydrothermal synthesis method in the presence of a mineralizer containing an alkali metal and/or an alkaline earth metal. Hereinafter, an example of the production method will be described.

### <Step S110: Step of preparing raw material>

In step S110, a raw material necessary for obtaining a compound satisfying a composition of the target lutetium silicate crystal is prepared.

Specifically, at least a raw material containing Lu and a raw material containing Si are prepared, and one or more compounds thereof are formed into an oxide. In addition, a raw material containing Ln and/or a raw material containing the activation element Q are/is prepared as necessary. Note that, in the present specification, for convenience, a raw material containing each constituent element prepared in step S110 is also referred to as a raw material of each constituent element. For example, "raw material containing Lu" and "raw material of Lu" have the same meaning.

As each raw material, a simple substance, an oxide, a hydroxide, a halide, an inorganic salt (a sulfate, a nitrate, a carbonate, or the like), an organic salt (an acetate or the like), or the like of a constituent element can be used. Each compound other than a simple substance may be an anhydride or a hydrate. Hereinafter, non-limiting examples of usable raw materials are described for each constituent element that can be contained in the lutetium silicate crystal in a representative embodiment.

As a raw material of Lu, for example, Lu₂O₃ can be used.

As a raw material of Si, for example, SiO₂ can be used. SiO₂ may be in a powder form or in a single crystal plate form.

As a raw material of Ln, for example, an oxide of Ln can be used. For example, when Ln is Y, Y₂O₃ can be used, and when Ln is Gd, Gd₂O₃ can be used.

As a raw material of the activation element Q, for example, an oxide or a fluoride of Q can be used. For example, when Q is Ce, CeO₂, Ce₂O₃, or CeF₃ can be used.

In an embodiment, the above-described raw materials are prepared so as to satisfy a ratio of the general formula (Lu₁₋ₓLnₓ)₂SiO₅ (0 ≤ x < 0.3). Here, a raw material mixture containing the raw materials may be prepared as necessary. For example, in an aspect in which the target lutetium silicate crystal contains Lu, Si, Ln and the activation element Q as constituent elements, the raw material mixture is preferably prepared such that a molar ratio between the sum of Lu, Ln, and Q, and Si in the raw material mixture satisfies 1.5 to 2.5 : 0.5 to 1.5.

### <Step S120: Step of causing raw materials to react by hydrothermal synthesis method in presence of mineralizer>

In step S120, the raw materials (or a raw material mixture prepared by mixing the raw materials) prepared in step S110 are caused to react by a hydrothermal synthesis method in the presence of a mineralizer.

The mineralizer is a compound containing an alkali metal and/or an alkaline earth metal, and for example, hydroxides and inorganic salts (carbonates and the like) of an alkali metal and/or an alkaline earth metal can be used. Non-limiting examples of the mineralizer include KOH, K₂CO₃, RbOH, Rb₂CO₃, CsOH, Cs₂CO₃, Ca(OH)₂, CaCO₃, Sr(OH)₂, SrCO₃, Ba(OH)₂, and BaCO₃, and it is preferable to select at least one from the group consisting of these compounds. Note that the alkali metal and/or alkaline earth metal contained in the mineralizer can be contained in a finally obtained lutetium silicate crystal.

A method for preparing a solution (reaction solution) to be subjected to hydrothermal synthesis is not particularly limited. For example, when a raw material mixture is prepared in step S110 described above, an aqueous solution of the mineralizer may be added to the raw material mixture, and the mixture may be further mixed as necessary. Alternatively, the mineralizer (preferably in a powder form) may be added to the raw material mixture, and the mixture may be further mixed as necessary. Alternatively, the above-described raw materials may be added to an aqueous solution of the mineralizer, and the mixture may be mixed appropriately. Here, a concentration of the mineralizer in a finally prepared reaction solution is preferably 1 M or more and 50 M or less, more preferably 5 M or more and 40 M or less, and still more preferably 10 M or more and 30 M or less.

Here, reaction conditions (specifically, a temperature condition) by a hydrothermal synthesis method can be adjusted by utilizing a fact that a pH of the reaction solution changes depending on the kind of alkali metal and/or alkaline earth metal contained in a mineralizer to be used and a concentration of the mineralizer. Although certain attention is required for handling a solution having a high alkalinity, a desired reaction solution can be prepared by appropriately adjusting the concentration of the mineralizer. In addition, it is also preferable to select the kind of mineralizer depending on the kind of raw material to be used and/or the kind of constituent element of the target lutetium silicate crystal.

The reaction conditions by the hydrothermal synthesis method are not particularly limited, and conditions used in a conventional hydrothermal synthesis method can be applied. A temperature condition is preferably in a range of 400°C or more and 800°C or less. This makes it possible to reliably obtain the target lutetium silicate crystal. When the reaction temperature is lower than 400°C, the target lutetium silicate crystal is not generated in some cases, and when the reaction temperature is higher than 800°C, the reaction temperature may exceed a heat resistance temperature of a hydrothermal synthesis container (reaction container). A pressure condition is preferably in a range of 50 MPa or more and 250 MPa or less. Note that it is preferably considered to adjust the pressure condition depending on the amount of water contained in the reaction container.

Time for the hydrothermal synthesis can be appropriately adjusted from a viewpoint of completing the reaction depending on the kind, amount, and the like of a raw material to be used. Here, two or more temperature conditions may be set within the above-described temperature range, and a predetermined temperature profile may be set. Such a temperature profile can be designed in consideration of a viewpoint of further improving homogeneity and stability of the reaction solution, a viewpoint of more efficiently generating the target lutetium silicate crystal, and the like. In Examples described later, an example of a specific temperature profile will be described.

In the production method of the present invention, since the raw materials (or raw material mixture) are caused to react by the hydrothermal synthesis method under a temperature condition significantly lower than that in the conventional CZ method, the evaporation phenomenon as described above for the CZ method hardly occurs. In addition, in general, in the case of the hydrothermal synthesis method, an obtained crystal is obtained with the most stable composition, and the composition may slightly deviate from a target composition. However, even if such deviation occurs, it is considered that a difference from the target composition is very small and can be adjusted.

### [Application of lutetium silicate crystal]

Next, an application of the above-described lutetium silicate crystal will be described.

The application of the lutetium silicate crystal is not particularly limited, but the lutetium silicate crystal is suitably used as a scintillator material. For example, when the lutetium silicate crystal of the present invention is activated with Ce, the activated lutetium silicate crystal functions as a scintillator material. In particular, since the lutetium silicate crystal of the present invention has very few defects, the scintillator material of the present invention may have characteristics such as density, fluorescence decay time, and fluorescence output comparable to those of a current material, and may further exhibit scintillation performance exceeding that of the current material.

The application of the scintillator material in a crystal form is not particularly limited, but the scintillator material in a crystal form can be preferably used for a radiation detector. The radiation detector can be used in fields such as radiology, physics, physiology, chemistry, mineralogy, and petroleum exploration, for example, for the above-described positron emission tomography (PET) apparatus, for cosmic ray observation, and for underground resource search.

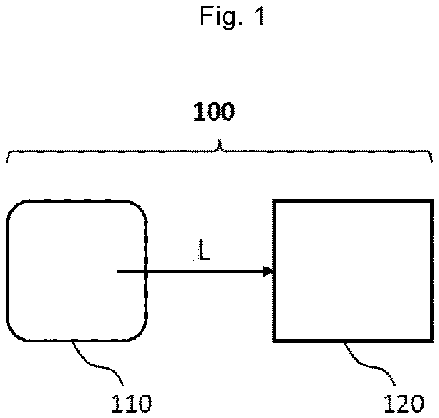

A configuration of the above-described radiation detector is not particularly limited, and a configuration similar to that of a conventional radiation detector can be adopted. Specifically, as schematically shown in Fig. 1, a radiation detector 100 according to an embodiment of the present invention includes a scintillator material (scintillator) 110 made of the above-described lutetium silicate crystal, and a photoelectric converter 120 (for example, a photomultiplier tube (PMT), a silicon photomultiplier (SiPM), a solid-state imaging element (CCD), an avalanche photodiode (APD), or a multi-pixel photon counter (MPPC)) that detects light L emitted from the scintillator material 110 and converts the light L into an electric signal. By using a scintillator material made of the above-described lutetium silicate crystal in place of a scintillator used in a conventional radiation detector, improvement of radiation detection accuracy is expected.

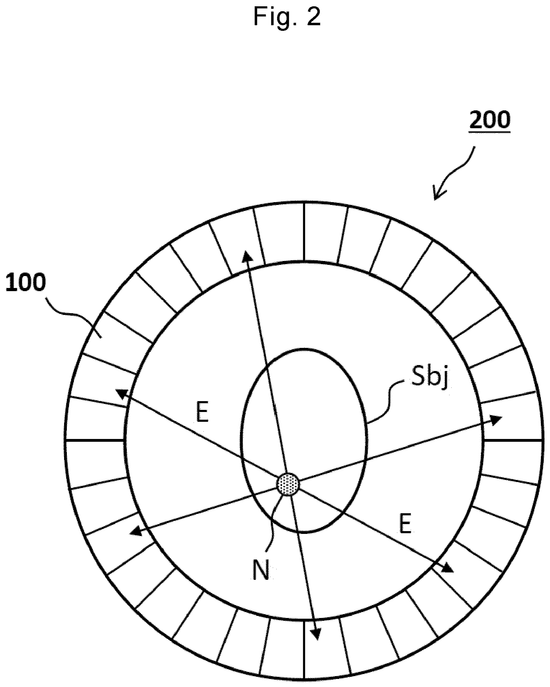

It is also possible to configure a radiation inspection apparatus using the above-described radiation detector. In an embodiment, the radiation inspection apparatus of the present invention is configured to detect radiation (such as a γ-ray) emitted from a subject with the above-described radiation detector. Such a radiation inspection apparatus can be used as a medical image processing apparatus or a probing apparatus for underground resource search. Examples of the medical image processing apparatus include a positron emission tomography (PET) apparatus and a single photon emission computed tomography (SPECT) apparatus. For example, as schematically shown in Fig. 2, in a PET apparatus 200, a plurality of (a large number of) radiation detectors 100 are arranged in a substantially circular shape so as to surround a subject Sbj. In addition, by multiplexing the ring-shaped structure, a plurality of tomographic images can be simultaneously obtained. A radiation source (radioactive substance) N is disposed in advance inside the subject Sbj. For example, when the subject is an animal such as a human, a radioactive isotope (positron emitting nuclide) is disposed in a specific organ or the like by administration of a radioactive agent. Then, an annihilation photon (annihilation photon pair) E generated by pair annihilation of the nuclide of the radioactive substance N is detected by the radiation detector 100. In other words, in each of the radiation detectors 100 constituting the PET apparatus 200, the scintillator material (scintillator) emits light by being excited by the annihilation photon E that passes through the subject Sbj (that is, is emitted from the subject Sbj), and the photoelectric converter (PMT or the like) detects the light emitted from the scintillator material and converts the light into an electric signal. Note that the configuration of the PET apparatus 200 shown in Fig. 2 is an example, and examples of a form of PET include two-dimensional PET, three-dimensional PET, time of flight (TOF) PET, and depth detection (DOI) PET. These can also be used in combination.

Hereinafter, the present invention will be described more specifically based on Examples, but the present invention is not limited by these examples.

### Examples

### [Production of crystal]

### <Example 1>

Lu₂O₃ and SiO₂ (both of which had a purity of 99.99%, were in a powder form, and were manufactured by Furuuchi Chemical Corporation) were prepared as raw materials of Lu and Si, respectively. The raw materials were weighed so as to satisfy a ratio of Lu₂SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for the hydrothermal synthesis, a temperature profile was used in which temperature was raised to 730°C over 12 hours under a pressure condition of 195 MPa, held for 24 hours, and then lowered to 630°C over 100 hours, and the reaction was terminated. Note that as a temperature lowering program from 630°C to room temperature at an end of the reaction, one hour was set, and then natural cooling was performed. As a result, a crystal of Example 1 was obtained.

### <Example 2>

Lu₂O₃, Y₂O₃, and SiO₂ (all of which had a purity of 99.99%, were in a powder form, and were manufactured by Furuuchi Chemical Corporation) were prepared as raw materials of Lu, Y, and Si, respectively. The raw materials were weighed so as to satisfy a ratio of Lu_{1.8}Y_{0.2}SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for hydrothermal synthesis, a pressure condition was set to 104 MPa, and a temperature profile similar to that in Example 1 was used. As a result, a crystal of Example 2 was obtained.

### <Example 3>

Lu₂O₃, SiO₂, and CeO₂ (all of which had a purity of 99.99%, were in a powder form, and were manufactured by Furuuchi Chemical Corporation) were prepared as raw materials of Lu, Si, and Ce, respectively. The raw materials were weighed so as to satisfy a ratio of Ce_{0.003}Lu_{1.997}SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for hydrothermal synthesis, a pressure condition was set to 124 MPa, and a temperature profile similar to that in Example 1 was used. As a result, a crystal of Example 3 was obtained.

### <Example 4>

Lu₂O₃, Y₂O₃, SiO₂, and CeO₂ (all of which had a purity of 99.99%, were in a powder form, and were manufactured by Furuuchi Chemical Corporation) were prepared as raw materials of Lu, Y, Si, and Ce, respectively. The raw materials were weighed so as to satisfy a ratio of Ce_{0.003}Lu_{1.797}Y_{0.2}SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for hydrothermal synthesis, a pressure condition was set to 127 MPa, and a temperature profile similar to that in Example 1 was used. As a result, a crystal of Example 4 was obtained.

### <Example 5>

Lu₂O₃, SiO₂, and CeO₂ (all of which had a purity of 99.99%, were in a powder form, and were manufactured by Furuuchi Chemical Corporation) were prepared as raw materials of Lu, Si, and Ce, respectively, and Gd₂O₃ was further prepared as a raw material of Gd (Ln element). The raw materials were weighed so as to satisfy a ratio of Ce_{0.003}Lu_{1.797}Gd_{0.2}SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for hydrothermal synthesis, a pressure condition was set to 200 MPa, and a temperature profile similar to that in Example 1 was used. As a result, a crystal of Example 5 was obtained.

### <Example 6>

Lu₂O₃ and SiO₂ (both of which had a purity of 99.99%, were in a powder form, and were manufactured by Furuuchi Chemical Corporation) were prepared as raw materials of Lu and Si, respectively. The raw materials were weighed so as to satisfy a ratio of Lu₂SiO₅, and mixed to obtain a raw material mixture in a powder form (0.4 g). The obtained raw material mixture and Ca(OH)₂ (20 M aqueous solution) as a mineralizer were put in an ampule made of silver (diameter: 5 mm × length: 10 cm), the ampule was put in a container containing water (8 mL), and hydrothermal synthesis was performed. As conditions for hydrothermal synthesis, a pressure condition was set to 200 MPa, and a temperature profile similar to that in Example 1 was used. As a result, a crystal of Example 6 was obtained.

### <Example 7>

Lu₂O₃ and SiO₂ (both of which had a purity of 99.99%, were in a powder form, and were manufactured by Furuuchi Chemical Corporation) were prepared as raw materials of Lu and Si, respectively. The raw materials were weighed so as to satisfy a ratio of Lu₂SiO₅, and mixed to obtain a raw material mixture in a powder form. The obtained raw material mixture was filled in an iridium crucible, and a crystal was grown by the CZ method. An argon gas (Ar + 0.3% O₂) containing 0.3% of oxygen as an atmospheric gas was introduced into a furnace at a flow rate of 1 L/min. Then, the raw material mixture was heated to a temperature at which the raw material mixture was melted by high frequency induction heating, a seed crystal was brought into contact with a liquid surface of the melt and solidified, and was pulled upward at a rate of 1 mm/h while being rotated at 10 rpm to crystallize the raw material mixture. As a result, a crystal of Example 7 was obtained.

### <Example 8>

Lu₂O₃, Y₂O₃, SiO₂, and CeO₂ (all of which had a purity of 99.99%, were in a powder form, and were manufactured by Furuuchi Chemical Corporation) were prepared as raw materials of Lu, Y, Si, and Ce, respectively. The raw materials were weighed so as to satisfy a ratio of Ce_{0.01}Lu_{1.79}Y_{0.2}SiO₅, and mixed to obtain a raw material mixture in a powder form. The obtained raw material mixture was filled in an iridium crucible, and a crystal was grown by the CZ method under growth conditions similar to those in Example 7. As a result, a crystal of Example 8 was obtained.

### <Example 9>

Lu₂O₃, Y₂O₃, SiO₂, and CeO₂ (all of which had a purity of 99.99%, were in a powder form, and were manufactured by Furuuchi Chemical Corporation) were prepared as raw materials of Lu, Y, Si, and Ce, respectively. The raw materials were weighed so as to satisfy a ratio of Ce_{0.003}Lu_{1.797}Y_{0.2}SiO₅, and mixed to obtain a raw material mixture in a powder form (0.4 g). The obtained raw material mixture and KOH (20 M aqueous solution) as a mineralizer were put in an ampule made of silver (diameter: 5 mm × length: 10 cm), the ampule was put in a container containing water (8 mL), and hydrothermal synthesis was performed. As conditions for the hydrothermal synthesis, temperature was raised to 650°C over 12 hours under a pressure condition of 149 MPa and held for 100 hours, then 12 hours was set as a temperature lowering program to room temperature, and then natural cooling was performed. As a result, a crystal of Example 9 was obtained.

### <Example 10>

Lu₂O₃, Y₂O₃, SiO₂, and CeO₂ (all of which had a purity of 99.99%, were in a powder form, and were manufactured by Furuuchi Chemical Corporation) were prepared as raw materials of Lu, Y, Si, and Ce, respectively. The raw materials were weighed so as to satisfy a ratio of Ce_{0.003}Lu_{1.797}Y_{0.2}SiO₅, and mixed to obtain a raw material mixture in a powder form (0.4 g). The obtained raw material mixture and KOH (30 M aqueous solution) as a mineralizer were put in an ampule made of silver (diameter: 5 mm × length: 10 cm), the ampule was put in a container containing water (8 mL), and hydrothermal synthesis was performed. As conditions for the hydrothermal synthesis, temperature was raised to 620°C over 12 hours under a pressure condition of 128 MPa and held for 100 hours, then 12 hours was set as a temperature lowering program to room temperature, and then natural cooling was performed. As a result, a crystal of Example 10 was obtained.

Table 2 shows compositions and production methods of the crystals of Examples 1 to 10 described above. In addition, Table 3-1 shows production methods and production conditions of the crystals of Examples 1 to 8, and Table 3-2 shows production methods and production conditions of the crystals of Examples 9 and 10. Note that, in Table 2, for the sake of clarity, the type of crystal (LSO or the like) based on a designed composition of each crystal is described, but as described above, it should be noted that the lutetium silicate crystal of the present invention (Examples 1 to 6, 9, and 10) is different from the conventional crystal (Examples 7 and 8) that can be classified into the same type at least in that the lutetium silicate crystal of the present invention contains an OH group in the crystal.

### [Table 2]

**Table 2: List of compositions and production methods of single crystals of Examples 1-10**

| Example | Type of Crystal | Compsition (Designed composition) | Production method |
|---|---|---|---|
| 1 | LSO | Lu2SiO5 | Hydrothermal synthesis |
| 2 | LYSO | Lu1.8Y0.2SiO5 | Hydrothermal synthesis |
| 3 | Ce:LSO | Ce0.003Lu1.997SiO5 | Hydrothermal synthesis |
| 4 | Ce:LYSO | Ce0.003Lu1.797Y0.2SiO5 | Hydrothermal synthesis |
| 5 | Ce:LGSO | Ce0.003Lu1.897Gd0.1SiO5 | Hydrothermal synthesis |
| 6 | LSO | Lu2SiO5 | Hydrothermal synthesis |
| 7 | LSO | Lu2SiO5 | CZ |
| 8 | Ce:LYSO | Ce0.01Lu1.79Y0.2SiO5 | CZ |
| 9 | Ce:LYSO | Ce0.003Lu1.797Y0.2SiO5 | Hydrothermal synthesis |
| 10 | Ce:LYSO | Ce0.003Lu1.797Y0.2SiO5 | Hydrothermal synthesis |

### [Table 3]

**Table 3-1: List of production methods and conditions of single crystals of Examples 1-8**

| Example | Production method | Type of Mineralizer (concentration) | Specification of Ampule | Water content (mL) | Temperature profile | | | | Pressure (MPa) |
|---|---|---|---|---|---|---|---|---|---|
| | | | | | Heat up time to 730°C | Dwell time | Cooling time to 630°C | Temperature lowering time to RT | |
| 1 | Hydrothermal synthesis | KOH (20M) | 5 mm Ø x 10 cm length, Ag | 8 | 12 h | 24 h | 100 h | 1 h | 195 |
| 2 | Hydrothermal synthesis | KOH (20M) | 5 mm Ø x 10 cm length, Ag | 8 | 12 h | 24 h | 100 h | 1 h | 104 |
| 3 | Hydrothermal synthesis | KOH (20M) | 5 mm Ø x 10 cm length, Ag | 8 | 12 h | 24 h | 100 h | 1 h | 124 |
| 4 | Hydrothermal synthesis | KOH (20M) | 5 mm Ø x 10 cm length, Ag | 8 | 12 h | 24 h | 100 h | 1 h | 127 |
| 5 | Hydrothermal synthesis | KOH (20M) | 5 mm Ø x 10 cm length, Ag | 8 | 12 h | 24 h | 100 h | 1 h | 200 |
| 6 | Hydrothermal synthesis | Ca(OH)2 (20M) | 5 mm Ø x 10 cm length, Ag | 8 | 12 h | 24 h | 100 h | 1 h | 200 |
| 7 | CZ | Growth conditions: Ir-crucible, 1 L min flow (Ar + 0.3% O2), rotation speed 10 rpm, pulling speed 1 mm/h | | | | | | | |
| 8 | CZ | Growth conditions: Ir-crucible, 1 L min flow (Ar + 0.3% O2), rotation speed 10 rpm, pulling speed 1 mm/h | | | | | | | |

**Table 3-2: List of production methods and conditions of single crystals of Examples 9-10**

| Example | Production method | Type of Mineralizer (concentration) | Specification of Ampule | Water content (mL) | Temperature profile | | | Pressure (MPa) |
|---|---|---|---|---|---|---|---|---|
| | | | | | Heating condition | Dwell time | Temperature lowering time to RT | |
| 9 | Hydrothermal synthesis | KOH (20M) | 5 mm Ø x 10 cm length, Ag | 8 | Up to 650°C for 12 h | 100 h | 12 h | 149 |
| 10 | Hydrothermal synthesis | KOH (30M) | 5 mm Ø x 10 cm length, Ag | 8 | Up to 620°C for 12 h | 100 h | 12 h | 128 |

### [Analysis of crystal]

### <Microscopic observation>

The crystals obtained in the above Examples were observed with an optical microscope.

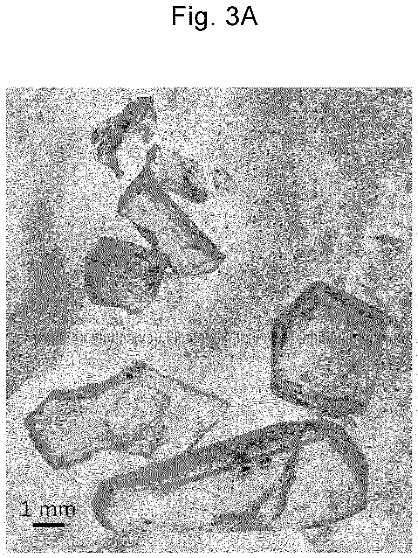

In Figs. 3A to 3E, microscopic images of the crystals of Examples 1 to 5 are shown as representative examples.

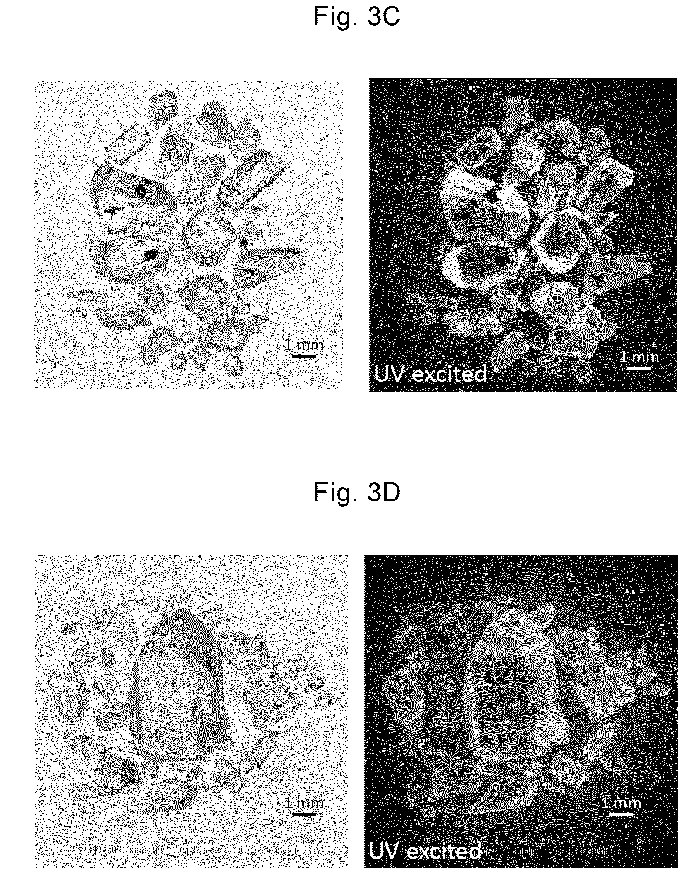

Here, on the right sides of Figs. 3C to 3E, microscopic images when the crystals of Examples 3 to 5 were irradiated with an ultraviolet ray are shown, respectively. Note that a scale bar in each image is 1 mm. Although not shown, the crystals of Examples 9 and 10 were also highly transparent crystals having a size of about 5 mm.

According to Figs. 3A to 3E, it has been confirmed that the obtained crystals have high transparency in microscopic observation, and that a crystal containing Ce as the activation element Q is excited by receiving an ultraviolet ray to cause constant light emission. Similarly, the crystals of Examples 9 and 10 were also confirmed to emit light by ultraviolet irradiation.

### <X-ray diffraction analysis>

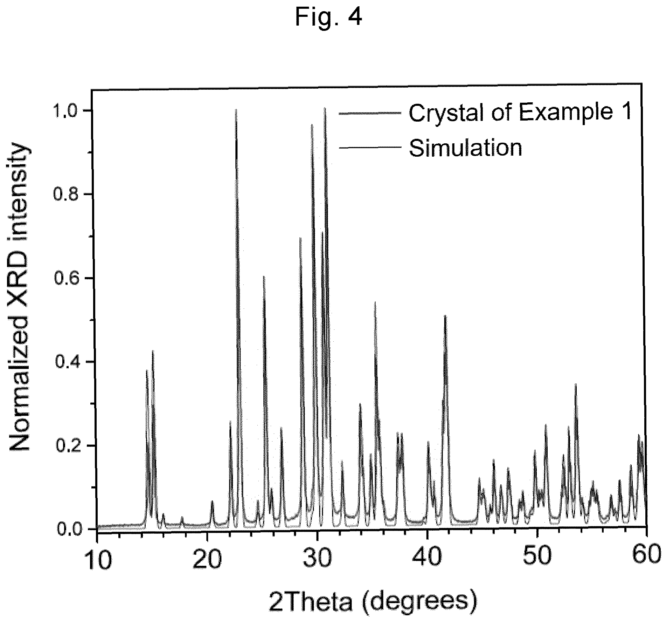

A powder sample was prepared from the crystal of Example 1 and subjected to powder X-ray diffraction measurement. Results thereof are shown in Fig. 4. Fig. 4 also shows a simulation result of a diffraction chart of a (monoclinic) crystal represented by Lu₂SiO₅. In Fig. 4, the intensity on the vertical axis is a value normalized with the highest intensity value of each diffraction chart as 1.0.

According to Fig. 4, it was found that in the diffraction chart of the crystal of Example 1, the degree of coincidence in a peak position (angle 2θ) and an intensity (normalized intensity) with the diffraction chart obtained by the above simulation was extremely high. As a result, it was confirmed that the obtained crystal had a crystal phase of monoclinic Lu₂SiO₅.

### <Translucency analysis>

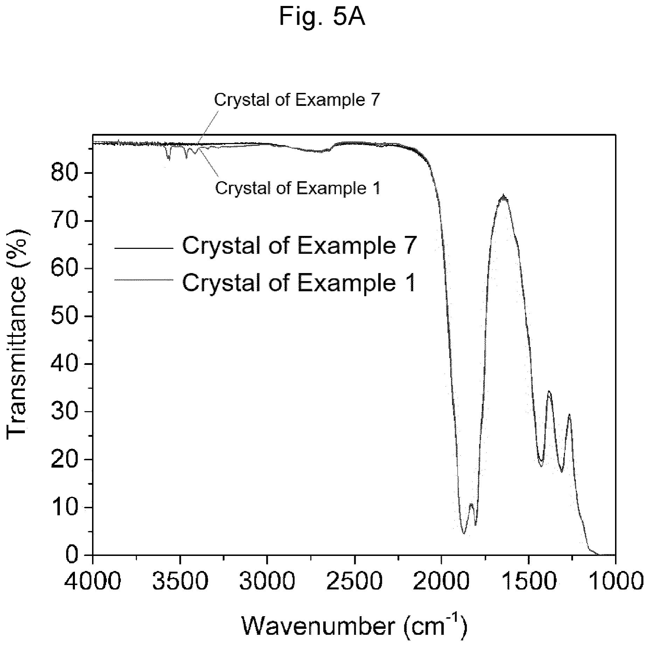

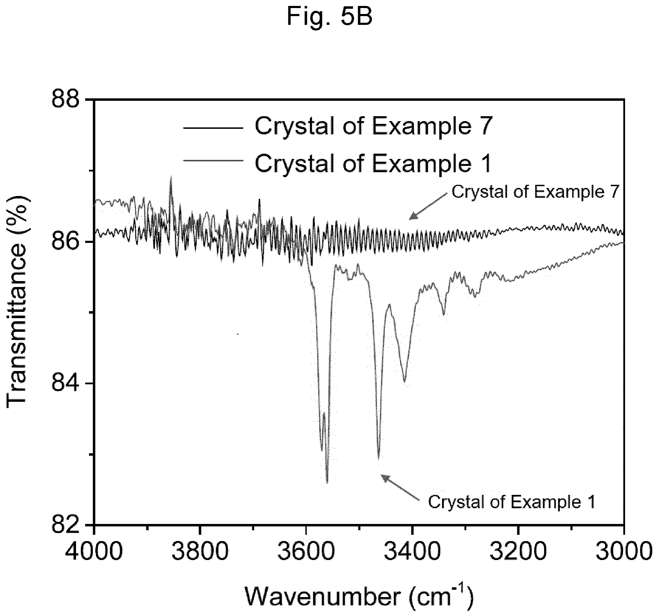

Translucency of the crystals of Examples 1 and 7 was analyzed by infrared spectroscopy. As an analyzer, a Fourier transform infrared spectrometer (Spectrum GX FT-IR system manufactured by PERKIN ELMER) was used. A sample size subjected to the analysis was 3 mm x 3 mm x 336 µm for the crystal of Example 1 and 1.5 mm x 1.5 mm x 336 µm for the crystal of Example 7. Results thereof are shown in Figs. 5A and 5B.

Fig. 5A shows graphs indicating infrared absorption spectra of crystals of Examples 1 and 7 in a wave number range of 1000 cm⁻¹ to 4000 cm⁻¹.

According to Fig. 5A, it was found that the spectra of the crystals of Examples 1 and 7 in a wave number range of 1000 cm⁻¹ to 3000 cm⁻¹ almost completely coincided with each other, and the spectra of the crystals of Examples 1 and 7 in a wave number range of 3000 cm⁻¹ to 4000 cm⁻¹ were different from each other.

Fig. 5B shows graphs indicating enlarged infrared absorption spectra shown in Fig. 5A in a wave number range of 3000 cm⁻¹ to 4000 cm⁻¹.

According to Fig. 5B, a clear difference was observed in a wave number range of 3000 cm⁻¹ or more and 3800 cm⁻¹ or less between the spectrum of the crystal of Example 1 and the spectrum of the crystal of Example 7, and in particular, in the crystal of Example 1, it was found that there was a characteristic absorption peak (peak pattern) in the wave number range. Then, as a result of identifying this characteristic absorption peak in light of characteristic absorption peaks found in various functional groups, the characteristic absorption peak was confirmed to be derived from an OH group.

From this, it was found that the crystal produced by the hydrothermal synthesis method using the method of the present invention has a specific absorption peak derived from an OH group in the near-infrared region of the infrared absorption spectrum (in particular, a wave number range of 3000 cm⁻¹ or more and 3800 cm⁻¹ or less).

### <Secondary ion mass spectrometry>

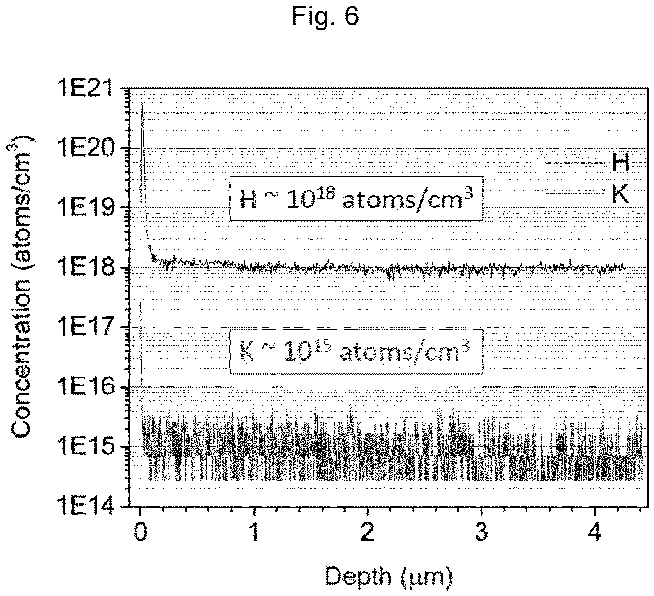

For the crystal of Example 4, a concentration of hydrogen (H) and a concentration of potassium (K) were measured using a secondary ion mass spectrometer (IMS-6F manufactured by Cameca) and a time-of-flight secondary ion mass spectrometry (TOF-SIMS manufactured by lonTOF Corporation), respectively. Fig. 6 shows analysis results of the concentrations of hydrogen (H) and potassium (K).

According to Fig. 6, it was found that in the obtained crystal, the concentration of hydrogen was about 1 × 10¹⁸ atoms/cm³, and the concentration of potassium was about 1 × 10¹⁵ atoms/cm³.

### <Ultraviolet-visible spectroscopic analysis>

Light transmittance and absorbance of the obtained crystal were analyzed by ultraviolet-visible spectroscopy. As an analyzer, an ultraviolet-visible near-infrared spectrophotometer (V-570 manufactured by JASCO Corporation) was used.

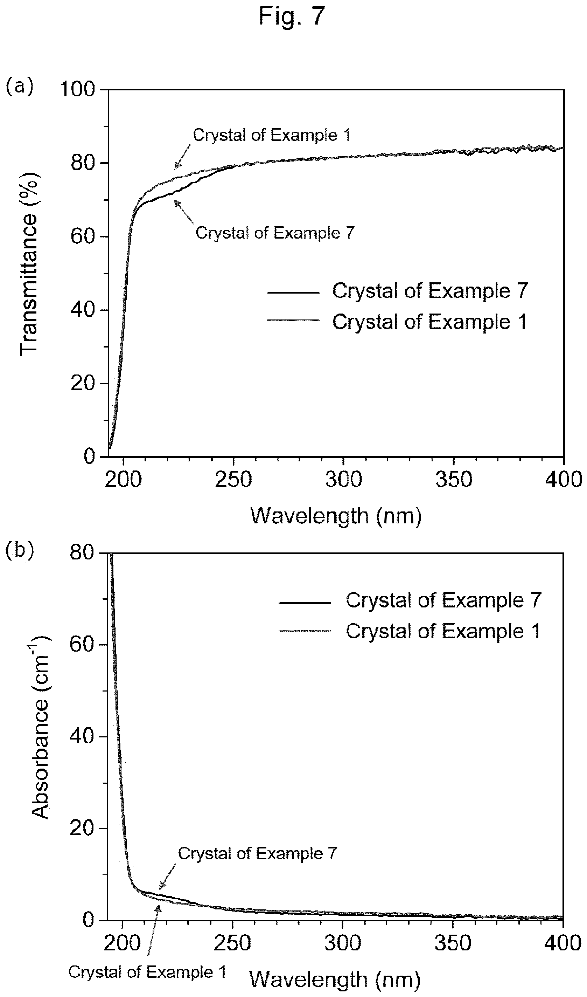

First, as an example of a crystal not containing the activation element Q, analysis results of the crystals of Examples 1 and 7 will be described with reference to Fig. 7. Note that the sample size subjected to the analysis for the crystal of Example 1 was 3 mm × 3 mm × 336 µm, and the sample size subjected to the analysis for the crystal of Example 7 was 1.5 mm × 1.5 mm × 336 µm.

Figs. 7(a) and 7(b) show graphs indicating transmission spectra and absorption spectra of the crystals of Examples 1 and 7, respectively.

According to the transmission spectra of Fig. 7(a), it was confirmed that the crystal of Example 1 significantly increased an ultraviolet transmittance in a wavelength range of 200 nm to 250 nm as compared with the crystal of Example 7, that is, in the absorption spectrum of Fig. 7(b), it was confirmed that the crystal of Example 1 significantly decreased an ultraviolet absorptivity in the wavelength range as compared with the crystal of Example 7.

From this, it was found that the crystal produced by the hydrothermal synthesis method using the method of the present invention has fewer defects, more specifically, has fewer lattice defects at an atomic level than the crystal produced by the conventional CZ method.

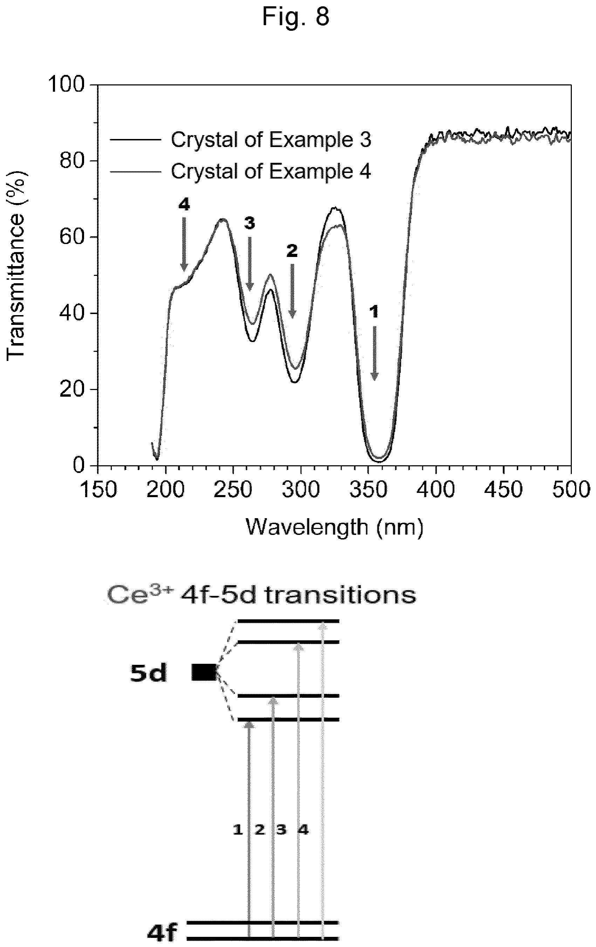

Next, as an example of the crystal containing the activation element Q, analysis results of the crystals of Examples 3, 4, and 8 will be described with reference to Figs. 8 to 10. Note that the sample size subjected to the analysis for the crystal of Example 3 was 3 mm × 3 mm × 336 µm, the sample size subjected to the analysis for the crystal of Example 4 was 3 mm × 5 mm × 336 µm, and the sample size subjected to the analysis for the crystal of Example 8 was 1.5 mm × 1.5 mm × 336 µm.

Fig. 8 shows graphs indicating transmission spectra of the crystals of Examples 3 and 4. In addition, on a lower side of the transmission spectra, a schematic diagram indicating 4f-5d electron orbital transition involving 4f electrons of Ce³⁺ is shown.

According to Fig. 8, in the spectra of the crystals of Examples 3 and 4, as indicated by four downward arrows and the numbers 1 to 4 in Fig. 8, four kinds (four locations) of transmittance changes corresponding to the 4f-5d electron orbital transition of Ce³⁺ were observed.

From this, in the crystals of Examples 3 and 4, it was confirmed that Ce as the activation element Q was present in the crystal in a state of Ce³⁺. That is, for the crystal produced by the hydrothermal synthesis method using the method of the present invention, it was found that in the crystal containing the activation element Q, the activation element Q could be present in the crystal at an appropriate ionic value for functioning as a luminescent center. As a result, it is considered that, in the crystal, a function of the activation element Q as a luminescent center is effectively exhibited, and a scintillator material having better luminescent characteristics can be obtained.

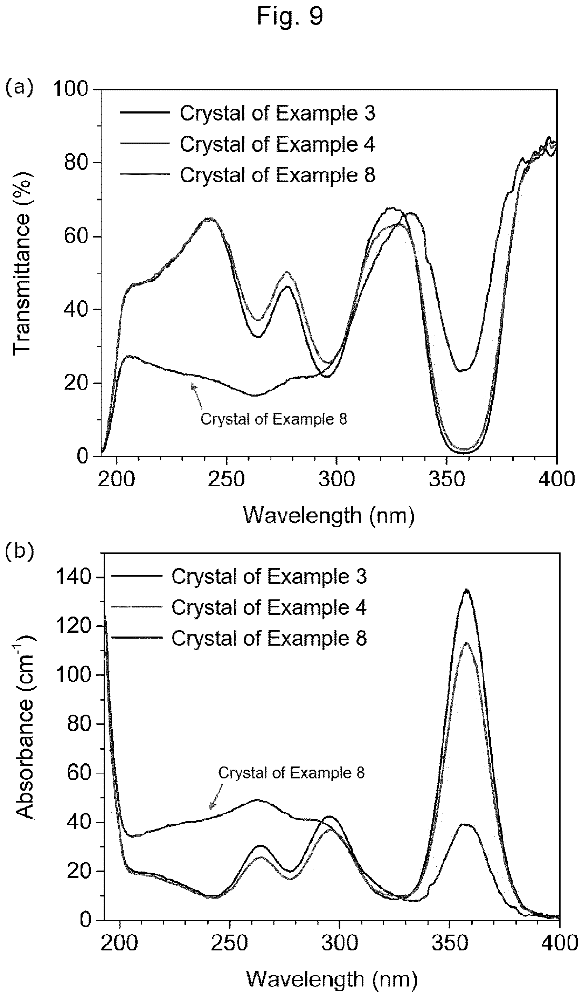

Figs. 9(a) and 9(b) show graphs indicating transmission spectra and absorption spectra of the crystals of Examples 3, 4, and 8, respectively.

According to Fig. 9(a), it was found that the transmission spectrum of the crystal of Example 9 was clearly different in shape from the transmission spectra of the crystals of Examples 3 and 4. Specifically, an ultraviolet transmittance of the crystal of Example 8 significantly decreases in a wavelength range of 200 nm to 300 nm as compared with those of the crystals of Examples 3 and 4, and the spectrum of the crystal of Example 8 in this range is broad. A similar characteristic is also observed in the absorption spectra of Fig. 9(b), and an ultraviolet absorptivity of the crystal of Example 8 significantly increases in a wavelength range of 200 nm to 300 nm as compared with those of the crystals of Examples 3 and 4, and the spectrum of the crystal of Example 8 in this range is broad.

From these results, it was presumed that in the crystal of Example 8 produced by the CZ method, Ce was in a state where trivalent (Ce³⁺) and tetravalent (Ce⁴⁺) were mixed.

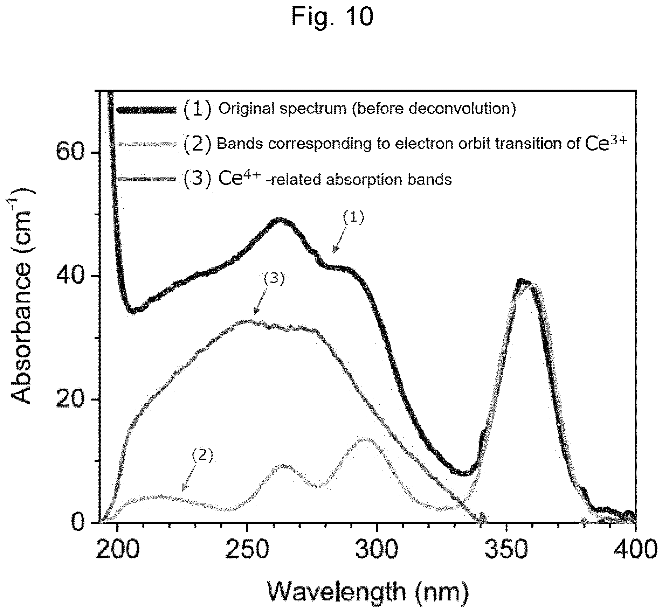

Therefore, the absorption spectrum obtained for the crystal of Example 8 was subjected to deconvolution processing. Results thereof are shown in Fig. 10.

Fig. 10 shows graphs indicating results of performing deconvolution processing on the absorption spectrum of the crystal of Example 8 (see Fig. 9(b)). In Fig. 10, (1) indicates an original absorption spectrum (before deconvolution), (2) indicates a band corresponding to 4f-5d electron orbital transition of Ce³⁺, and (3) indicates an absorption band related to Ce⁴⁺.

As can be seen from Fig. 10, the ultraviolet absorption derived from Ce⁴⁺ is a substantially semicircular band from a cutoff wavelength (less than 200 nm) before the processing to about 340 nm (see (3)).

On the other hand, the ultraviolet absorption band (2) derived from Ce³⁺ has extremely high similarity in shape to the band shown in Fig. 9(b) for the crystals of Examples 3 and 4, and it was found that it could be said that almost 100% of the ultraviolet absorption band in a wavelength range of 200 nm to 300 nm obtained for the crystals of Examples 3 and 4 is derived from Ce³⁺ as estimated on the basis of a ratio (relative intensity) calculated from the absorption band before the processing.

In other words, a noteworthy fact for the absorption spectra shown in Fig. 9(b) is that in the absorption spectra of the crystals of Examples 3 and 4, in addition to a dip of an ultraviolet absorptivity observed in a wavelength range of 265 nm to 300 nm, a change in the ultraviolet absorptivity in a wavelength range of 200 nm to 250 nm shows a decreasing tendency contrary to that of the crystal of Example 8, whereby the absorptivity at a bottom observed in a wavelength range of 240 nm to 250 nm is almost the same as the absorptivity at another bottom observed in a wavelength range of 310 nm to 340 nm. That is, it can be said that such a tendency in the absorption spectrum of the target crystal is one of grounds indicating that Ce contained as an activation element in the crystal is present in the crystal in a state of Ce³⁺.

That is, also from these results, for the crystal produced by the hydrothermal synthesis method using the method of the present invention, it was confirmed that in the crystal containing the activation element Q, the activation element Q could be present in the crystal at an appropriate ionic value for functioning as a luminescent center. As a result, it is considered that, in the crystal, a function of the activation element Q as a luminescent center is effectively exhibited, and a scintillator material having better luminescent characteristics can be obtained.

Note that the change in the ultraviolet absorptivity derived from trivalent (Ce³⁺) cerium and tetravalent (Ce⁴⁺) cerium and the change in the absorption spectrum caused by the change in the ultraviolet absorptivity also well apply to the absorption spectrum (see Fig. 1(b) of Non Patent Literature 1) of the crystal (LSO: Ce and LYSO: Ce (4.47 at% Y)) reported in Non Patent Literature 1. As for the spectral shape in a wavelength range of 200 nm or more and 400 nm or less, the above-described tendency is not confirmed for the absorption spectra of the crystals of Examples 3 and 4 of the present application, and the absorptivity at a bottom observed in a wavelength range of about 240 nm to 250 nm is significantly higher than the absorptivity at another bottom observed in a wavelength range of about 310 nm to 340 nm or less. Therefore, in the crystal produced by the CZ method described in Non Patent Literature 1, it can be said that there is a high probability that Ce is in a state in which trivalent (Ce³⁺) and tetravalent (Ce⁴⁺) are mixed.

### <Luminescent characteristics>

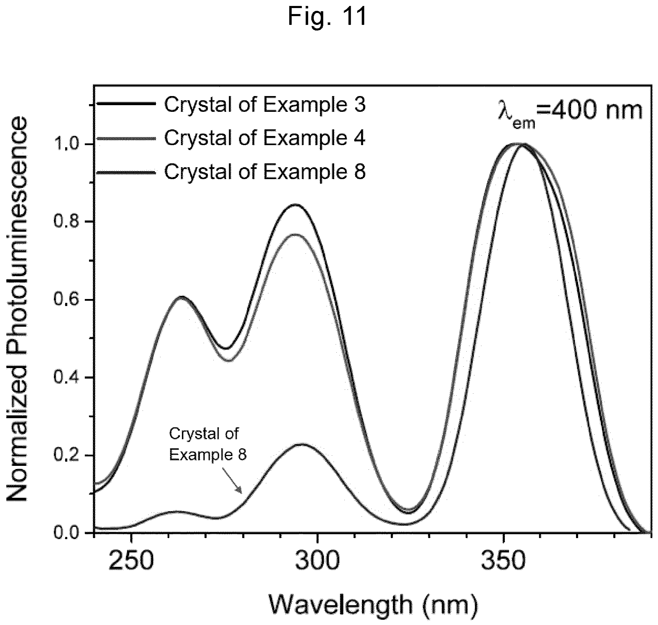

Among the obtained crystals, a crystal containing Ce as an activation element was analyzed for luminescent characteristics. As an analyzer, a spectrofluorometer (F-7100 manufactured by Hitachi High-Tech Co., Ltd.) was used. As an analysis condition, an emission wavelength (λₑₘ) was fixed to 400 nm, and an emission intensity when excited at each excitation wavelength (λₑₓ) was measured. Results thereof are shown in Fig. 11.

Fig. 11 shows graphs indicating excitation spectra of crystals of examples 3, 4 and 8. Note that, in Fig. 11, the emission intensity on the vertical axis is a value normalized with a peak value of an emission intensity when excited at an excitation wavelength in a range of 330 nm to 380 nm as 1.0.

As can be seen from Fig. 11, a tendency of a change in emission intensity when excited at an excitation wavelength in a range of 330 nm to 380 nm is roughly similar among the three kinds of crystals described above, whereas a tendency of an emission intensity when excited at an excitation wavelength in a range of 240 nm to 330 nm is largely different between the crystals of Examples 3 and 4 and the crystal of Example 8.

Specifically, in the crystals of Examples 3 and 4, sharp rises (peaks) of the emission intensity were observed at an excitation wavelength in a range of 280 nm to 310 nm and at an excitation wavelength in a range of 250 nm to 275 nm, whereas in the crystal of Example 8, an emission intensity having a peak value of about 0.2 was obtained at the excitation wavelength in the former range, but a change (increase) in the emission intensity was hardly observed at the excitation wavelength in the latter range. This is in good agreement with the analysis results of the transmission spectra and absorption spectra of the crystals of Examples 3, 4, and 8, and discussion thereof described with reference to Figs. 8 to 10. That is, in the crystals of Examples 3 and 4, Ce as the activation element Q is present in the crystal in a state of Ce³⁺, whereas in the crystal of Example 8, Ce is in a state in which trivalent (Ce³⁺) and tetravalent (Ce⁴⁺) are mixed, and it can be understood that the decrease in emission intensity as described above occurs due to ultraviolet absorption derived from Ce⁴⁺.

From these results, it was found that the crystal produced by the hydrothermal synthesis method using the method of the present invention was superior in luminous efficiency to the crystal produced by the conventional CZ method.

Here, as a result of further analyzing the excitation spectra (Fig. 11) obtained for the crystals of Examples 3 and 4, it was found that a ratio of a peak value of an emission intensity when excited at an excitation wavelength in a range of 275 nm or more and 325 nm or less to a peak value of an emission intensity when excited at an excitation wavelength in a range of 325 nm or more and 390 nm or less satisfied 0.6 or more and 0.9 or less, and a ratio of a peak value of an emission intensity when excited at an excitation wavelength in a range of 250 nm or more and 275 nm or less to a peak value of an emission intensity when excited at an excitation wavelength in a range of 325 nm or more and 390 nm or less satisfied 0.4 or more and less than 0.75. From this, it has been estimated that the fact that the target crystal satisfies the above characteristic in the excitation spectrum when the emission wavelength is fixed to 400 nm can be one of indices indicating that the crystal has excellent luminescent characteristics.

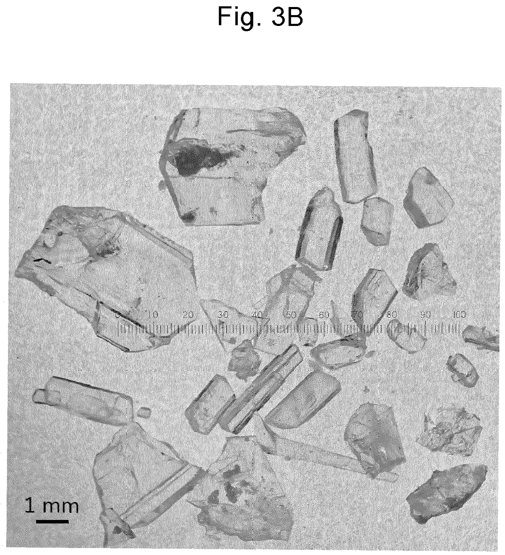

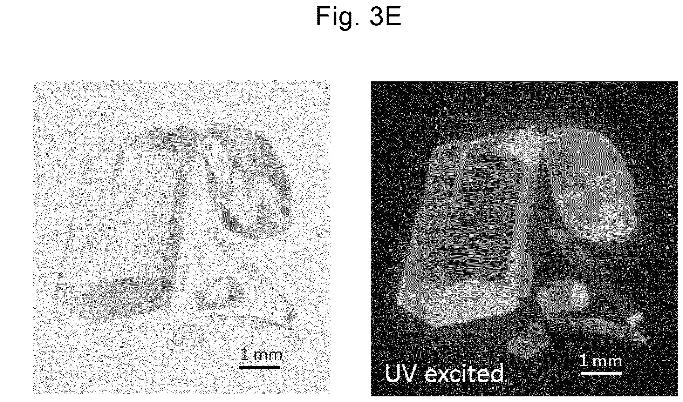

Note that the tendency of the luminescent characteristics caused by the presence (mixture) of trivalent (Ce³⁺) cerium and tetravalent (Ce⁴⁺) cerium described above also well applies to the crystals reported in Non Patent Literatures 1 and 2. For example, the emission spectra of LSO: Ce and LYSO: Ce (4.47 at% Y) referred to above are described in Fig. 2(a) of Non Patent Literature 1, and rises of emission intensity are observed at wavelengths of about 300 nm and 260 nm, but both the emission intensities are significantly lower than an emission intensity at a wavelength (Eₓ) of 356 nm, and do not satisfy the above index. In addition, emission spectra of BGO (manufactured by Shanghai Institute of Ceramics (SIC)), LSO (manufactured by CTI Molecular Imaging (CTI)), LYSO (manufactured by Crystal Photonics, Inc. (CPI)), and LYSO (manufactured by Saint-Gobain Ceramics & Plastics, Inc. (SG)) are described in Fig. 3 of Non Patent Literature 2, and for the LSO and LYSO, rises of emission intensity are observed at wavelengths of about 300 nm and 265 nm, but both the emission intensities are significantly lower than an emission intensity at a wavelength (ex) of 358 nm, and do not satisfy the above index. Therefore, in the crystals produced by the CZ method described in Non Patent Literatures 1 and 2, it can be said that there is a high probability that doped Ce is in a state in which trivalent (Ce³⁺) and tetravalent (Ce⁴⁺) are mixed.

### Reference Signs List

- 100: Radiation detector
- 110: Scintillator material (scintillator)
- 120: Photoelectric converter
- 200: PET apparatus (radiation inspection apparatus)
- L: Light
- E: Radiation (annihilation photon) emitted from subject
- N: Radiation source (radioactive substance, positron emitting nuclide)
- Sbj: Subject

## Claims

1. A lutetium silicate crystal comprising at least lutetium (Lu), silicon (Si), oxygen (O), and hydrogen (H),
having the same crystal structure as a crystal represented by Lu₂SiO₅, and
having an absorption peak derived from an OH group in a wave number range of 3000 cm⁻¹ or more and 3800 cm⁻¹ or less in an infrared absorption spectrum.

2. The crystal as claimed in claim 1, further comprising Ln (Ln is at least one selected from the group consisting of lanthanoid elements excluding Lu, scandium (Sc), and yttrium (Y)).

3. The crystal as claimed in claim 2, wherein Ln is selected from the group consisting of Y and gadolinium (Gd).

4. The crystal as claimed in any one of claims 1 to 3, further comprising an alkali metal and/or an alkaline earth metal.

5. The crystal as claimed in claim 4, wherein a concentration of the alkali metal and/or alkaline earth metal is in a range of 1 × 10¹² atoms/cm³ or more and 1 × 10¹⁸ atoms/cm³ or less.

6. The crystal as claimed in any one of claims 1 to 5, wherein a concentration of hydrogen is in a range of 1 × 10¹⁷ atoms/cm³ or more and 1 × 10¹⁹ atoms/cm³ or less.

7. The crystal as claimed in any one of claims 1 to 6, not having an absorption band in a wavelength range of 200 nm or more and 250 nm or less in an ultraviolet-visible absorption spectrum.

8. The crystal as claimed in any one of claims 1 to 6, which is activated with an activation element Q selected from the group consisting of cerium (Ce), praseodymium (Pr), europium (Eu), and terbium (Tb).

9. The crystal as claimed in claim 8, wherein the activation element Q is Ce.

10. The crystal as claimed in claim 9, wherein the Ce is Ce³⁺.

11. The crystal as claimed in claim 9 or 10, having a first absorption peak in a wavelength range of 330 nm or more and 390 nm or less, a second absorption peak in a wavelength range of 275 nm or more and 330 nm or less, and a third absorption peak in a wavelength range of 240 nm or more and less than 275 nm in an ultraviolet-visible absorption spectrum, wherein magnitudes of absorbance of the first to third absorption peaks are smaller in order of the first absorption peak, the second absorption peak, and the third absorption peak.

12. The crystal as claimed in any one of claims 9 to 11, wherein in an excitation spectrum when an emission wavelength is fixed to 400 nm, a ratio of a peak value of an emission intensity when excited at an excitation wavelength in a range of 275 nm or more and 325 nm or less to a peak value of an emission intensity when excited at an excitation wavelength in a range of 325 nm or more and 390 nm or less satisfies 0.6 or more and 0.9 or less, and a ratio of a peak value of an emission intensity when excited at an excitation wavelength in a range of 250 nm or more and 275 nm or less to a peak value of an emission intensity when excited at an excitation wavelength in a range of 325 nm or more and 390 nm or less satisfies 0.4 or more and less than 0.75.

13. A method for producing the lutetium silicate crystal as claimed in any one of claims 1 to 10, the method comprising causing a raw material containing lutetium (Lu), a raw material containing silicon (Si), a raw material containing Ln (Ln is at least one selected from the group consisting of lanthanoid elements excluding Lu, scandium (Sc), and yttrium (Y)) as necessary, and a raw material containing an activation element Q (Q is selected from the group consisting of cerium (Ce), praseodymium (Pr), europium (Eu), and terbium (Tb)) as necessary to react by a hydrothermal synthesis method in presence of a mineralizer containing an alkali metal and/or an alkaline earth metal.

14. The method as claimed in claim 13, wherein a concentration of the mineralizer is in a range of 1 M or more and 50 M or less.

15. The method as claimed in claim 13 or 14, further comprising preparing a raw material mixture containing the raw materials, wherein the raw material mixture is prepared such that a molar ratio between a sum of Lu, Ln, and Q, and Si in the raw material mixture satisfies 1.5 to 2.5 : 0.5 to 1.5.

16. The method as claimed in any one of claims 13 to 15, wherein the reaction by the hydrothermal synthesis method is performed in a temperature range of 400°C or more and 800°C or less and a pressure range of 50 MPa or more and 250 MPa or less.

17. A scintillator material comprising the lutetium silicate crystal as claimed in any one of claims 8 to 12.

18. A radiation detector comprising:
the scintillator material as claimed in claim 17; and
a photoelectric converter that detects light from the scintillator material and converts the light into an electric signal.

19. A radiation inspection apparatus comprising the radiation detector as claimed in claim 18,
the apparatus being configured to detect radiation emitted from a subject with the radiation detector.
